# EUROPEAN PATENT APPLICATION

(11) **EP 1 868 083 A1**
(43) Date of publication of application: **19.12.2007**
(21) Application number: 06115360.7
(22) Date of filing: 13.06.2006
(51) Int. Cl.: G06F 9/44

(54) **Use of context information in localisation**

(71) Applicant: Microsoft Corporation, Redmond WA 98052 (US)
(72) Inventor: Grimes, Robert c/o Microsoft (EPDC), 18, Dublin (IE); Farrell, Terry c/o Microsoft (EPDC), 18, Dublin (IE); Ahs, David c/o Microsoft (EPDC), 18, Dublin (IE)
(74) Representative: Wallis, Helen Frances Mary

(57) **Abstract**

Methods and apparatus for capturing context information which relates to resources, such as strings, which need to be localised within a software product are described. The method involves appending a reference to each of the resources that are to be localised and then launching the software product using these resources with appended references. Each user interface (UI) element within the software product is then iterated through, capturing information about each UI element. This captured information is processed and stored for subsequent use, for example in localisation.

## Description

### BACKGROUND

Software products, such as applications and operating systems, are often provided in many different language versions. The process of converting a software product from the initial language it was written in to other languages is known as 'localisation'. Typically the localisation is done by translating all the string elements within the user interface (UI) of the product and any other language specific parts (e.g. hotkeys, coordinates, sizes) from a first language, referred to as the source language (e.g. English) into another language (e.g. Italian), referred to as the target language. Once all the language specific parts have been translated, the product is re-built to produce the language specific version for the target language and then tested extensively before it can be shipped to a customer.

The translation of strings is performed by a translator who is provided with a table of all the strings in the Ul that require translation with empty cells for insertion of the translated strings. Having inserted the translated strings in the target language, the resultant table is reviewed by a linguistic reviewer, who may be a natural speaker of the target language. However, even after such a review, linguistic errors may still remain because both the translation and review have been done in isolation from the real use of the strings in the software product itself. This may be particularly significant for some languages where the correct translation of a word or phrase for use on a button may be different to the correct translation for use in a title or in a body of text.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Methods and apparatus for capturing context information which relates to resources, such as strings, which need to be localised within a software product are described. The method involves appending a reference to each of the resources that are to be localised and then launching the software product using these resources with appended references. Each user interface (Ul) element within the software product is then iterated through, capturing information about each Ul element. This captured information is processed and stored for subsequent use, for example in localisation.

The present example provides a method of capturing context information for use in localisation of a software product, the software product comprising a plurality of localisable resources and a user interface comprising a plurality of UI elements, the method comprising: appending a different unique reference to each of the plurality of localisable resources to produce a plurality of decorated localisable resources; launching the software product using the plurality of decorated localisable resources; capturing information associated with a first UI element; processing the captured information associated with the first UI element; storing the processed captured information associated with the first UI element; and repeating the capturing, processing and storing steps for each of the plurality of Ul elements.

Advantageously, this provides context information which can be displayed during localisation of a software product (e.g. during the translation or review stage). Such use results in more efficient, more accurate and faster localisation of the software product.

Preferably the information associated with a first Ul element comprises at least one of: an element ID, a dialog ID, a state ID, a control ID, a control type, a control caption, coordinates associated with the first Ul element and an image of the first Ul element.

Preferably appending a different unique reference to each of the plurality of localisable resources to produce a plurality of decorated localisable resources comprises: identifying one of the plurality of localisable resources; generating a unique reference for the identified one of the plurality of localisable resources; appending the unique reference to the identified one of the plurality of localisable resources; and repeating the identifying, generating and appending steps for each of the plurality of localisable resources to produce a plurality of decorated localisable resources.

Preferably generating a unique reference for the identified one of the plurality of localisable resources comprises: selecting at least one parameter associated with the identified one of the plurality of localisable resources; and calculating a hash function of the selected at least one parameter.

Advantageously, the hash function provides a unique reference for a localisable resource which is consistent across different builds of a software product. The unique reference may also be less likely to be truncated when the software product is launched using the decorated localisable resources.

Preferably the hash function comprises one of: MD4, MD5, SHA-1 and SHA-2.

Advantageously, these hash functions provide unique references even where the values of the parameters may be similar.

The method may further comprise: storing the plurality of decorated localisable resources.

The method may further comprise: storing the unique references generated for each of the plurality of localisable resources.

Preferably processing the captured information associated with the first Ul element comprises: identifying one of the plurality of decorated localisable resources; extracting the unique reference from the identified one of the plurality of decorated localisable resources; using the extracted reference to access information associated with the identified one of the plurality of decorated localisable resources; and repeating the identifying, extracting and using steps for each of the plurality of decorated localisable resources.

Preferably, the first Ul element comprises one of: a dialog, a menu, a toolbar, a tooltip, an error message and an annotation.

A second example provides a method of localising a software product, the software product comprising a plurality of localisable resources and the method comprising: capturing context information as described above; storing the captured context information in a mapping data store; identifying a first localisable resource and a value for the first localisable resource in a source language; accessing context information for the first localisable resource from the mapping data store; displaying the context information and the value for the first localisable resource; receiving an input of a first translated resource; storing the first translated resource; and repeating the identifying, accessing, displaying, receiving and storing steps for each of the plurality of localisable resources.

Advantageously, is a more efficient, more accurate and faster method of localisation of the software product.

A third example provides a method of localising a software product, the software product comprising a plurality of localisable resources and the method comprising: capturing context information as described above; storing the captured context information in a mapping data store; selecting a first string in a first language; identifying one or more localisable resources in the first language having a value containing the first string and identifying values for the identified one or more localisable resources in both a first language and a second language; accessing context information for the identified one or more localisable resources from the mapping data store; displaying the accessed context information and the values for the identified one or more localisable resources in the first and the second languages; and repeating the selecting, identifying, accessing, and displaying steps for another string in the first language.

Advantageously, is a more efficient, more accurate and faster method of localisation of the software product.

A fourth example provides a computer program comprising computer program code means adapted to perform all the steps of any of the preceding methods when said program is run on a computer. The computer program may be embodied on a computer readable medium.

A fifth example provides an apparatus for capturing context information for use in localisation of a software product, the software product comprising a plurality of localisable resources and a user interface comprising a plurality of Ul elements, the apparatus comprising: means for appending a different unique reference to each of the plurality of localisable resources to produce a plurality of decorated localisable resources; means for launching the software product using the plurality of decorated localisable resources; means for capturing information associated with a first UI element; means for processing the captured information associated with the first UI element; means for storing the processed captured information associated with the first UI element; and means for repeating the capturing, processing and storing steps for each of the plurality of UI elements.

A sixth example provides a localisation tool comprising: an apparatus for capturing context information as described above; a processor; a display apparatus; a user input device; a memory arranged to store executable instructions arranged to cause the processor to: store the captured context information a mapping data store; identify a first localisable resource and a value for the first localisable resource in a source language from a localisation database; access context information for the first localisable resource from a mapping data store; output the accessed context information and the value for the first localisable resource to the display apparatus; receive an input of a first translated resource from the user input device; store the first translated resource; and repeat the identifying, accessing, outputting, receiving and storing steps for each of the plurality of localisable resources.

Preferably the accessed context information comprises at least one of: a control type and an image of a UI element.

A seventh example provides a localisation tool comprising: an apparatus for capturing context information as described above; a processor; a display apparatus; a user input device; a memory arranged to store executable instructions arranged to cause the processor to: store the captured context information a mapping data store; select a first string in a first language from a localisation database; identify one or more localisable resources in the first language having a value containing the first string and values for the identified one or more localisable resources in the first language from the localisation database; identify values for the identified one or more localisable resources in a second language; access context information for the identified one or more localisable resources from a mapping data store; output the accessed context information and the values for the identified one or more localisable resources in the first and the second languages to the display apparatus; and repeat the selecting, identifying, accessing, and outputting steps for another string in the first language.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a flow diagram of a method of obtaining context information from a software product;
FIG. 2 shows a schematic diagram of two dialogs;
FIG. 3 shows an example flow diagram of a method of decorating localisable resources;
FIG. 4 shows an example flow diagram of a method of capturing images of dialogs;
FIG. 5 shows an example flow diagram of a method of processing the captured dialog data;
FIG. 6 shows a schematic diagram of a localisation tool which may be used in performing initial translations of localisable resources such as strings;
FIG. 7 shows a method of operation of the localisation tool;
FIG. 8 shows a schematic diagram of a screen layout for the localisation tool;
FIG. 9 shows a method of operation of a localisation tool which may be used by a reviewer to review translations; and
FIG. 10 shows a schematic diagram of a screen layout for the tool.

Common reference numerals are used to designate similar elements in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

As described above, linguistic errors occur when software products are localised because the translation of strings and the subsequent review is done in isolation from the real use of the strings in the software product itself. A particular string (e.g. 'File') in English may be used in several places in a software product (e.g. on a menu, a button and a tooltip) and another language may require one or more different translations dependent upon the particular use of the string.

One method by which the translator or reviewer could obtain some further information about the use of a string would be to ask for a textual description. This information would need to be provided by someone familiar with the software (e.g. the developer) and it would be a very time consuming process to obtain this information (there are many thousands of strings in a large software application).

Another method by which a translator or reviewer can obtain context information requires them to run the software product (e.g. an application) whilst simultaneously performing the translations of strings. By providing the translator / reviewer with instructions to step through the application, they can identify where the strings listed in the table for translation are used. However, where the same string occurs in many instances, it is difficult to determine which instance is being translated at any time. Additionally, many software products have considerable amounts of dynamic UI in which the appearance of the UI depends upon the exact sequence of steps prior to the display of the UI. This means that the UI can only be viewed by running the software product and it is not possible to provide the translator / reviewer with a UI template. Consequently, the translator / reviewer will need to be provided with detailed instructions to ensure that they perform the correct steps to see all the strings that they are to translate. Furthermore, some portions of the Ul may only be accessible under certain conditions, such as connection of a particular peripheral, in a certain network configuration or in a particular error state. This means that it is not feasible for the entire Ul to be navigated by a translator.

The term 'localisation' is used herein to refer to the process of translation and / or the process of review of the translations.

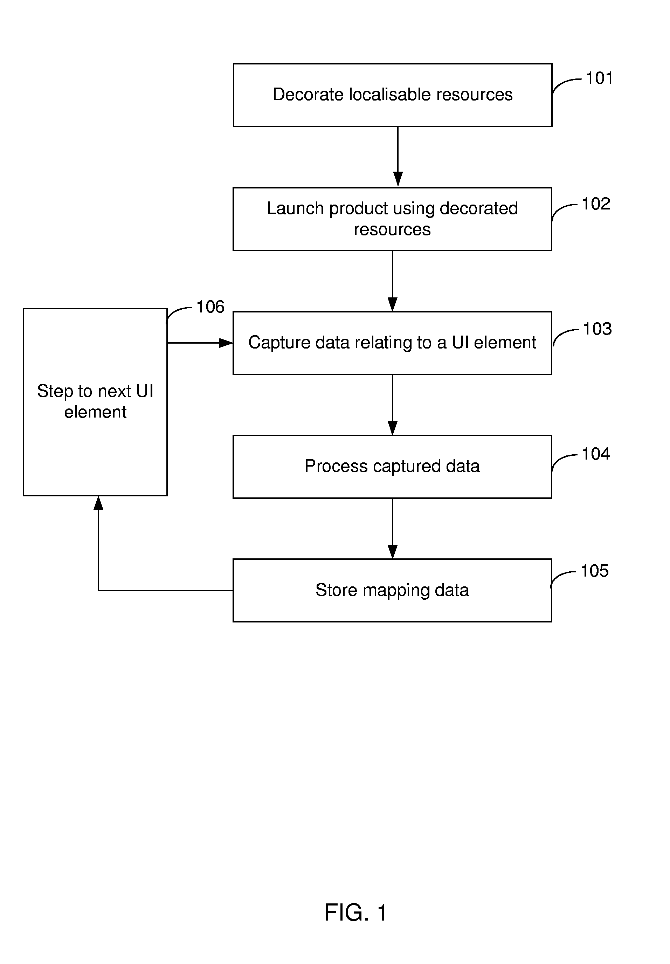

FIG. 1 is a flow diagram of a method of obtaining context information from a software product. This context information may then be subsequently used to assist in localisation as is described in detail below. By providing the translator and / or the linguistic reviewer with this context information, i.e. information on how a string is used within the software product, the number of such errors that occur can be reduced and potentially eliminated.

Each localisable resource within a software product, such as strings, dialogs, menus, toolbars, tooltips, error messages, buttons, file names, titles, annotations, hotkeys, html, xml etc., has a number of associated parameters.
These parameters include the value of the resource, i.e. what the resource actually is, e.g. the string "Hello", and an identifier, referred to herein as a resource ID e.g. idsOK. Other parameters may include, but are not limited to, a filename, a resource type (e.g. string, html, xml), a developer comment, origin information (e.g. detailing a previous product / version that the resource has been used in), translation status etc. In some circumstances different resources (i.e. different resource IDs) may have the same value, e.g. idsOK1 and idsOK2 may both have a value of the string "OK" and in some circumstances the resource ID may not bear any resemblance to the value, e.g. idsAppName may have the value of the string "Word" or "Excel". The resource ID may in some circumstances be quite long, particularly where it includes the file name and resource type, which may be necessary to ensure that it is unique e.g.
ids_userprefsdialog_save_percentfreebeforeoptimize_textbox_max_width_string;o str and
msoidscchartlibaddremovesecondaryhorizontalaxistitleadjacenttoaxisitem;ostr.
The resource ID is internal to the software product whilst the value of the resource may be visible to a user of the product e.g. the user may see the strings "OK" or "Word".

In order to obtain context information, the localisable resources within a software product are decorated (step 101). The term 'decorated' is used herein to refer to the appending of a reference to the value of a resource. For example, the string "OK" may be decorated with a first reference, e.g. [ref1] such that the decorated resource (or decorated string) is "OK_[ref1]". The original strings may be stored in a file such as a dynamic link library (DLL) which may include the following information:

| Resource ID | String |
|---|---|
| idsOK | OK |
| idsAppName | Word |

The decorated strings, once created, may be stored in a revised file (e.g. a new DLL) which may include the decorated string instead of (or in addition to) the original string value:

| Resource ID | Decorated String |
|---|---|
| idsOK | OK_[ref1] |
| idsAppName | Word_[ref2] |

The decoration process is described in more detail below.

The term 'appending' is used herein to refer to the attaching or adding of a reference to a resource irrespective of how the attaching / adding occurs or where the attaching / adding occurs. For example the reference may be appended before, after or in the middle of the reference. In another example, the reference may be located elsewhere or hidden and linked to the resource.

Having decorated all the localisable resources and stored this information in one or more files, the product is launched using these files containing the decorated information (step 102). The launching of the product may be performed manually (e.g. by a user) or automatically. Where the product is launched manually, this may be performed by an expert who is proficient in the product. However, it may only be necessary for this expert to launch and exercise the application once.

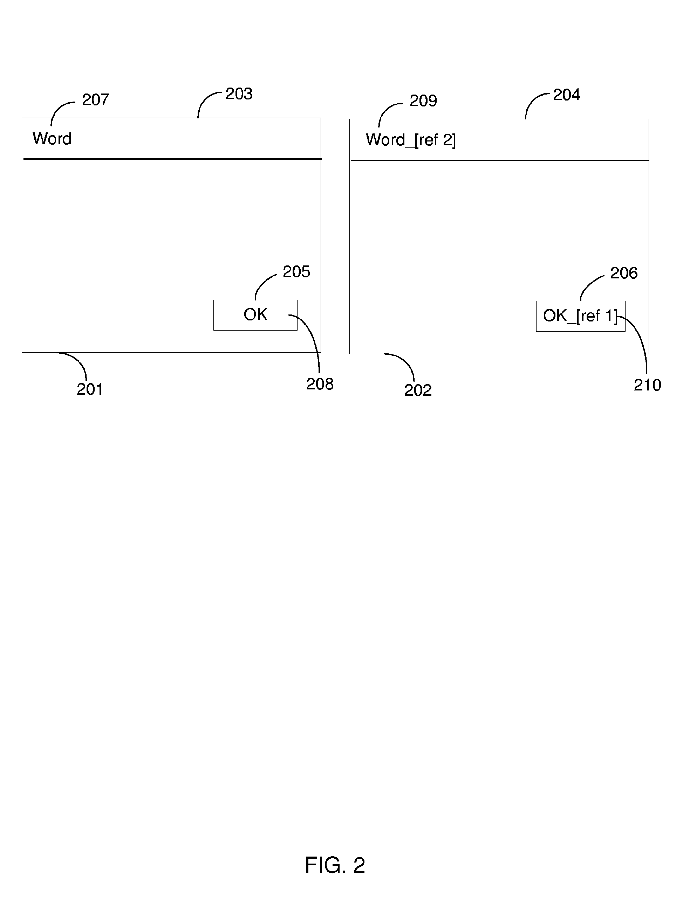

The UI of a software product includes a large number of UI elements such as dialogs (e.g. pop-up windows, screens etc), menus, toolbars, tooltips, error messages etc, each of which may contain one or more controls, such as text areas or boxes, buttons with text, captions, lists etc. The Ul of a software product may contain very large numbers (e.g. thousands) of dialogs and an even larger number of controls. Each UI element, such as a dialog, may therefore contain many localisable resources and when the product is launched using the files containing the decorated information, the decorated strings are shown instead of the original strings. This is shown in FIG. 2 which shows a schematic diagram of a first dialog 201 produced by launching an application using the original string information (as shown in the first table above) and a second dialog 202 produced by launching the same application using the decorated string information (as shown in the second table above). Each dialog 201, 202 contains two controls, a title bar 203, 204 and a button 205, 206. Each control contains a string and in the first dialog 201 these strings are the original string values 207, 208 and in the second dialog 202 these strings are the decorated strings 209, 210.

By appending the references to the values of the resources rather than replacing the values of the resources by the references, the resulting dialog 202 (or other UI element) is still understandable by a human and it is possible for a user to navigate the product launched using the decorated resources (in step 102). Furthermore, some strings require specific formatting (e.g. a string that is defined a date / time template for a specific language) and just replacing the value of the resource by a reference may cause the software to stop working.

Having launched the product (in step 102), data relating to a first Ul element (e.g. dialog 202 in FIG. 2) is captured (step 103). Examples of data which is captured may include one or more of the dialog ID, the state ID, each control ID, the type of each control, the control location, the control size and the caption on each control. For the example of the dialog 202 in FIG. 2, the following data may be captured:

| Dialog ID | Control ID | Control Type | Caption |
|---|---|---|---|
| 1 | 1 | Button | OK_[ref1] |
| 1 | 5 | Title Bar | Word_[ref2] |

Where a software product uses dynamic Ul the appearance of a dialog (or other Ul element) may depend upon the exact sequence of steps prior to the display of the particular dialog. In such a case, use of state ID (in addition to or instead of Dialog ID) may be beneficial. The state of a dialog is the specific run-time instance of a dialog (or other Ul element) with certain controls enabled / visible. Each state is given a unique ID, referred to herein as the state ID. This state ID represents the exact sequence of steps (e.g. the required sequence of keyboard strokes and / or mouse clicks) which led to the capture of the UI element. For example, the state ID 1 may identify a particular instance of a Help/About dialog within Microsoft Word and may therefore represent the following steps:
- Launch Microsoft Word
- Click on 'Help' menu
- Select 'About Microsoft Office Word'

The captured data is then processed (step 104) to determine information about the resource which is represented by each captured caption. The information being determined may include the resource ID of each captured caption (e.g. to determine that the resource ID for captured caption "OK_[ref1]" is idsOK). Further information may also be determined, such as the filename, the resource type etc. The processing may involve use of a look-up table, processing of the reference (e.g. ref1) or any other suitable technique and an example method of processing the reference is described in more detail below.

Information about the Ul element (e.g. dialog 202) that has been obtained through the capture and process steps (steps 103 and 104) is then stored as mapping data. This mapping data maps context information (e.g. state ID and control ID) to the resource ID, for example as follows:

| State ID | Control ID | Control Type | Resource ID | String |
|---|---|---|---|---|
| 1 | 1 | Button | idsOK | OK |
| 1 | 5 | Title Bar | idsAppName | Word |

The software product then steps to the next Ul element (step 106) and repeats the capturing, processing and storing steps (steps 103-105) for the next Ul element (e.g. the next dialog) and this is then repeated (steps 106, 103-105) for each Ul element within the software product. This creates a collection (e.g. a database) of mapping information for each Ul element (e.g. for each dialog and other Ul element) in the software product which may then be used in many applications, including localisation, as will be described in more detail below.

To ensure that every Ul element and every state of a Ul element is captured, a set of instructions may be defined associated with each state ID (e.g. as a test case or an automation routine). This set of instructions may be used (in step 106) to step through each state ID.

It will be appreciated that the iterative process shown in FIG. 1 is by way of example only and the iteration through Ul elements may be performed in alternative ways (e.g. capturing all the information for Ul elements before commencing processing of the captured data). It will also be apparent that the process of decorating the localisable resources (step 101) may be performed separately from the use of those decorated resources (steps 102-106). The method steps shown in FIG. 1 are described in more detail below.

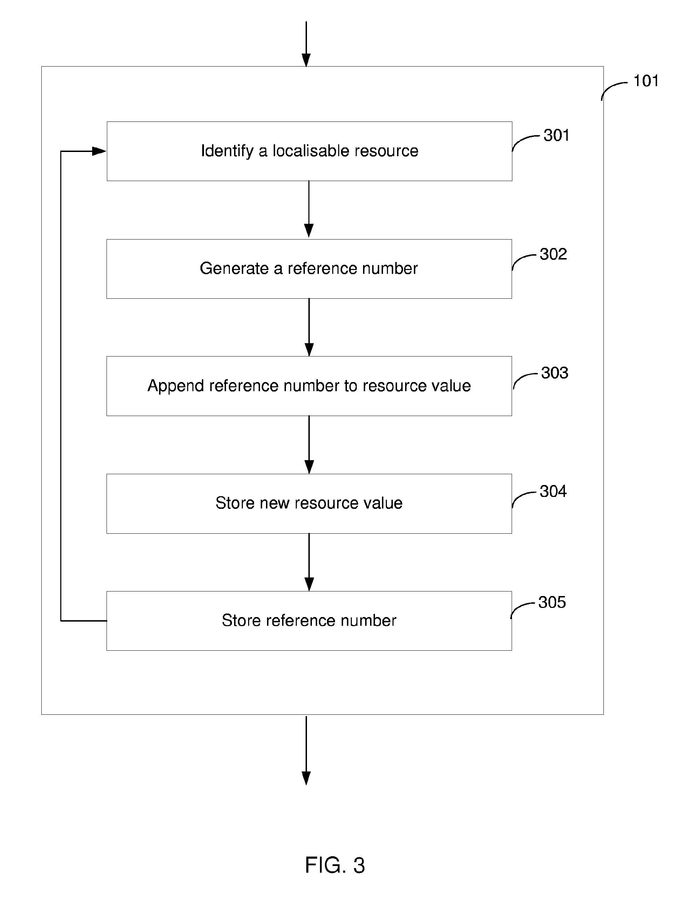

FIG. 3 shows an example flow diagram of a method of decorating the localisable resources (step 101). A localisable resource is identified (step 301) for example by reading a resource from a DLL. A reference number is generated (step 302) for example by calculating the hash of one or more parameters associated with the resource, for example the filename, the resource type and the resource ID. Other examples include the resource ID alone or the resource ID and the value of the resource. It may be necessary to use a combination of parameters, rather than just a single parameter, such as the resource ID, because the resource ID may not be unique across the entire software product. Hash functions map a large block of information, b, to an output h(b) typically of much smaller size. The hash function has the property that given a block b, it is computationally infeasible to find another block, b', with the same hash value, i.e. where h(b) = h(b'). Suitable hash functions for use in generation of a reference include SHA-1 (Secure Hash Algorithm-1), SHA-2, MD4 (Message Digest 4) and MD5. These hash functions are particularly effective in producing unique hashes where the original blocks of information are similar, which is often the case because the resource IDs are often similar (e.g. idsAppName1, idsAppName2 etc). More traditional hash functions (e.g. CRC32, a cyclic redundancy check algorithm) may be used; however, these may result in more collisions (i.e. non-unique hash values).

The use of a hash function as the reference is beneficial because it is unique to the combination of resource parameters used and it may be much smaller in size (e.g. a 32-bit number or a 128 to 160 bit digest which equates to a 8-10 character string of Unicode characters in the Ul) than using the combination of parameters (which itself is a unique combination). If a very long reference was used, it would be extremely difficult to display the decorated resource in the control when the application is launched (step 102) and this may lead to the Ul extending outside the screen dimensions and so become inaccessible to users or automation tools. In some cases, the software using the strings may explicitly limit the buffer size that it loads strings into, leading to the reference being truncated from the end of the string and / or truncation may occur when the UI is generated such that the entire reference is not visible. Truncation of the resource may lead to problems in capture of UI element data (in step 103).

Instead of using a hash function as the unique reference to decorate a resource, every string in the product could be given an incrementing integer ID. However, use of a hash function (such as MD5) is beneficial because the resultant generated references (or "pseudo" IDs) are consistent across builds. For example, if a new string is added to a new build, the incrementing integer IDs are pushed out of line with the previous build (e.g. a resource which had an ID of 1001 in a first build may have an ID of 1002 in a subsequent build). This requires a carefully maintained association between a mapping table and the relevant build or mapping error will occur. However, the hash values remain constant across all builds.

The generated reference number is then appended to the resource value (step 303) and the new decorated resource value and the reference number are both stored (steps 304-305). The reference number may be stored along with other parameters associated with the resource, such as resource ID, filename, resource type etc.

In capturing data relating to a UI element, such as a dialog (in step 103) an image of the UI element may also be captured and this may be stored, for example, as a bitmap, and the file location stored as part of the mapping data, as follows:

| State ID | Control ID | Control Type | Resource ID | String | Image location |
|---|---|---|---|---|---|
| 1 | 1 | Button | idsOK | OK | image\st1 .bmp |
| 1 | 5 | Title Bar | idsAppName | Word | image\st1 .bmp |

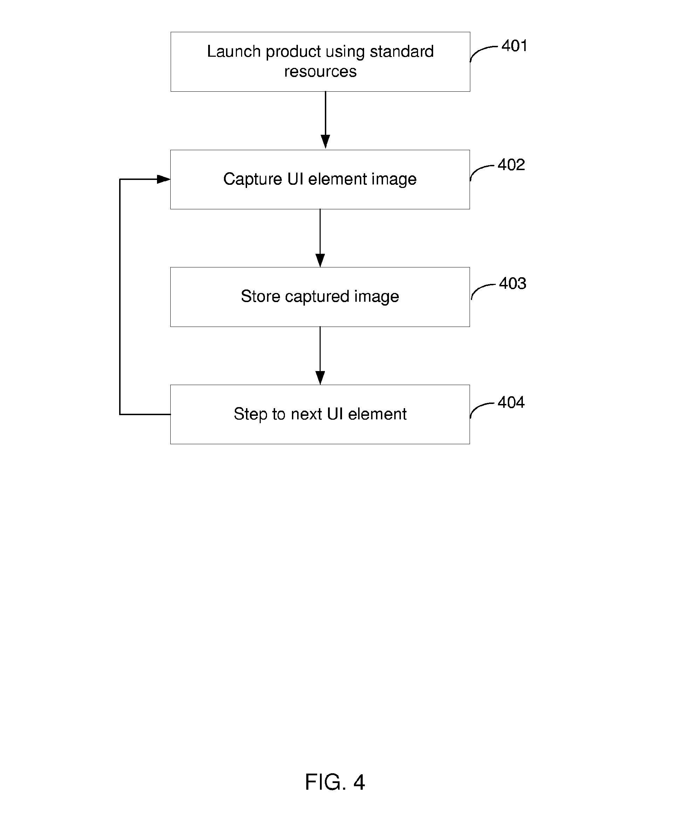

At the same time as capturing the image information, the coordinates relating to the UI element may also be captured or they may be captured in a separate process. In another example, the image of the UI element (e.g. a dialog) may be captured in a separate process, as shown in FIG. 4, in which the software product is launched using the standard (i.e. not decorated) resources (step 401) and a first UI element image is captured (step 402) and stored (step 403). The product is then stepped to display the next UI element (step 404), for example as described in relation to step 106 of FIG. 1. The process (steps 402-404) is then repeated so that images of all of the UI elements in the software product are captured. The process may use the same set of instructions to ensure that all states are captured as is used in capturing the decorated resources (as shown in FIG. 1 and described above). The state ID and control ID may then be used to correlate the UI element data (captured in step 103) and the UI element images (captured in step 402). The capturing process (step 103) may also capture location information for each control.

An example of the capturing process for a Win32 format dialog is shown below, in which an on screen window is identified by a transient "window handle" (HWND) within the system:
1. Capture a bitmap picture:
   - Find location of window using GetWindowRect() API.
   - Create a device context and bitmap object compatible with the window - CreateCompatibleDC()/CreateCompatibleBitmap()
   - copy the bits into the bitmap - BitBlt()
2. Enumerate the controls on the dialog and extract useful information:
   EnumChildWindows(HWND)
   Captions: GetWindowText(HWND of child)
   Location: GetWindowRect(HWND of child)
   Control ID: GetWindowLong(HWND of child)

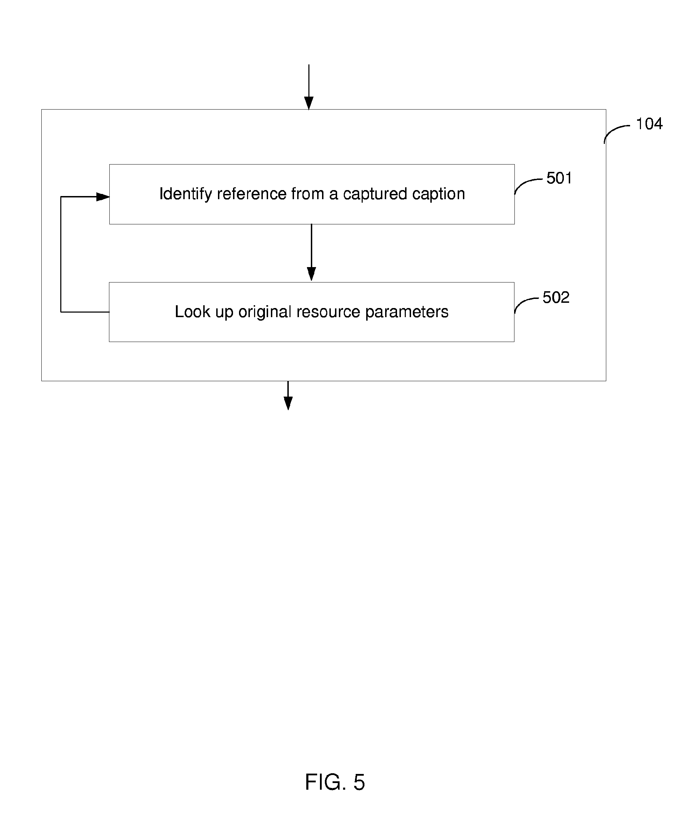

FIG. 5 shows an example flow diagram of a method of processing the captured Ul element data (step 104) in which a reference is identified from a first captured caption (step 501). This identification may be done by parsing the captured caption using parsing rules or other information. For example, where the captured caption has the form '[resource value]_[reference]' the parsing rules may extract the part of the caption after the underscore character. In another example, where the reference is always in the form of a 32-bit number or 8-10 character string, the final 32-bits or 8-10 characters of the captured caption may be extracted. In another example, a special token may be used within the caption to signify start and end of the reference, e.g. <![[ and ]]!>. This may be particularly useful for where a caption in the Ul is really a combination of 2 strings e.g. an error messages saying "XXX went wrong. Click Yes to continue" could be 2 strings in the DLL - the "XXX went wrong" and a separate string "Click Yes to continue". Using these special tokens, the decorated resource would be:
XXX went wrong.<![[12345678]]!> Click Yes to continue.<![[87654321 ]]!> Having identified the reference, the original resource parameters can be looked up (step 502), for example using the information stored in step 305 of FIG. 3.
The process (steps 501-502) is then repeated for each captured caption in the Ul element.

In another example, a two way function may be used as the reference (instead of a hash function) and the reverse function used instead of a look-up (in step 502). However, as two way functions are primarily designed for cryptographic transfer (e.g. 3DES, a three key version of the Data Encryption Standard) the output size of the function is generally the same or larger than the input and this may be undesirable if it leads to truncations when the product is launched using the decorated resources (as described above).

The process of stepping to the next Ul element (step 106) may be performed manually or the process may be automated. A set of test cases (for human interpretation) or automated scripts (for automatic execution) may be prepared that cover each possible state of a UI element (as described above).
Each test case / script can be stepped through in turn in order to step through each UI element and each state of each UI element within the software product. Where the process is performed automatically, the scripts may be input before, during or after the launch of the software product (step 102). A dedicated application may be used to read the scripts and simulate the required keyboard strokes and / or mouse clicks to control the software product.

Having stored all the mapping data (in step 105), for example in a mapping data database, it may be beneficial to normalise the data in order to remove repeats where the same resource is used in the same context in more than one UI element (e.g. in more than one dialog). For example, the resource which comprises the string "OK" (e.g. resource ID = idsOK) may appear on a button (e.g. Control Type = button) hundreds of times in the data as captured. By normalising the mapping data, all the entries except for one may be removed. Where images of dialogs have been captured, it may however be beneficial in some circumstances to maintain a record of all the images associated with a particular resource ID even though the rest of the data may be removed as part of the normalisation process.

In addition to, or instead of, normalising the mapping data, it may be beneficial to divide the mapping data into a set of tables, one for each resource ID which indicates the particular states (identified by State ID) and / or the particular situations (identified by Control Type) that the resource is used in within the software product.

In addition to, or instead of, normalising the mapping data and / or dividing the mapping data by resource ID, it may be beneficial to divide the mapping data into a set of tables, one for each resource value, particularly where the resource is a string. The resultant table shows where a string is repeated in multiple resources (identified by resource ID), states (identified by State ID) and / or situations (identified by Control Type) within the software product.

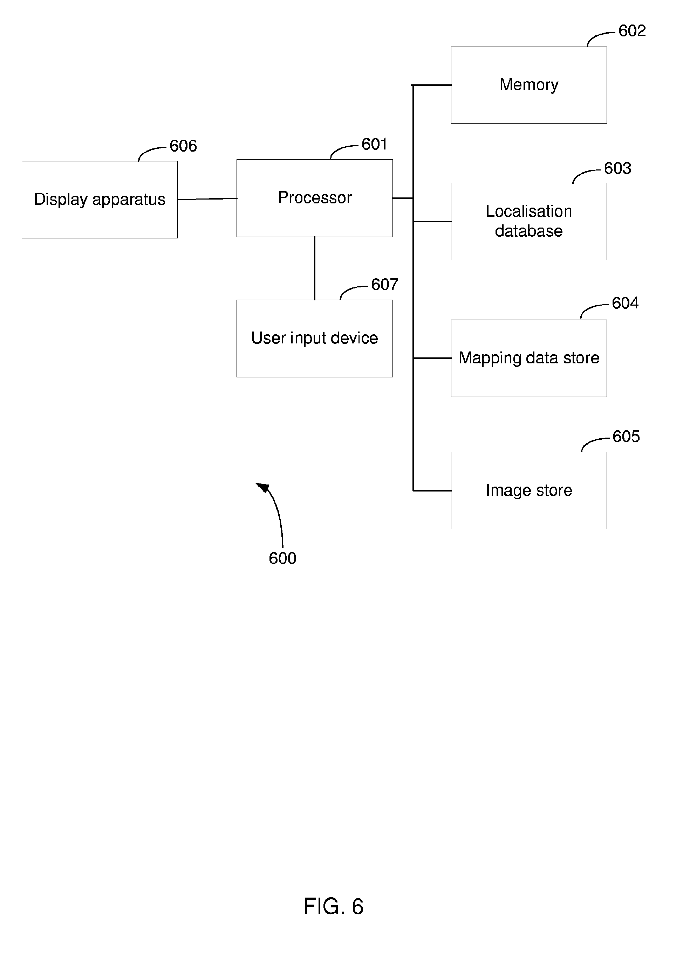

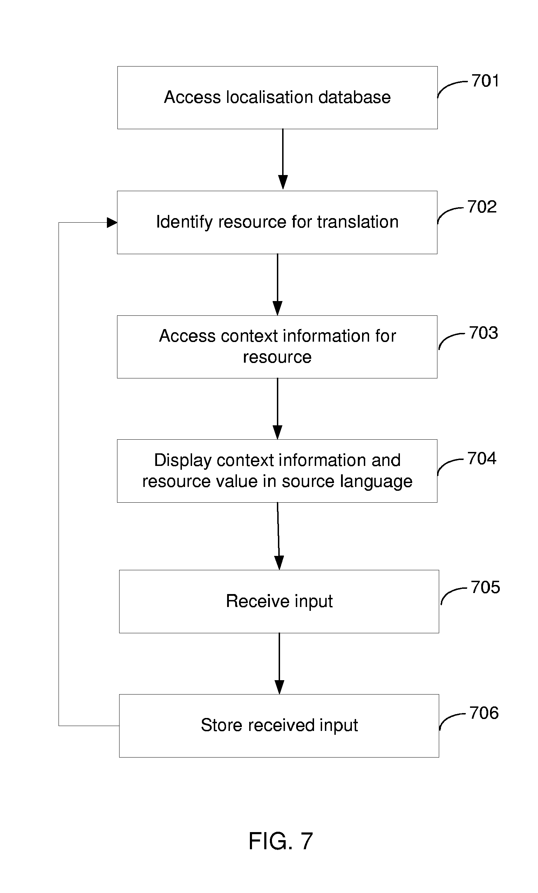

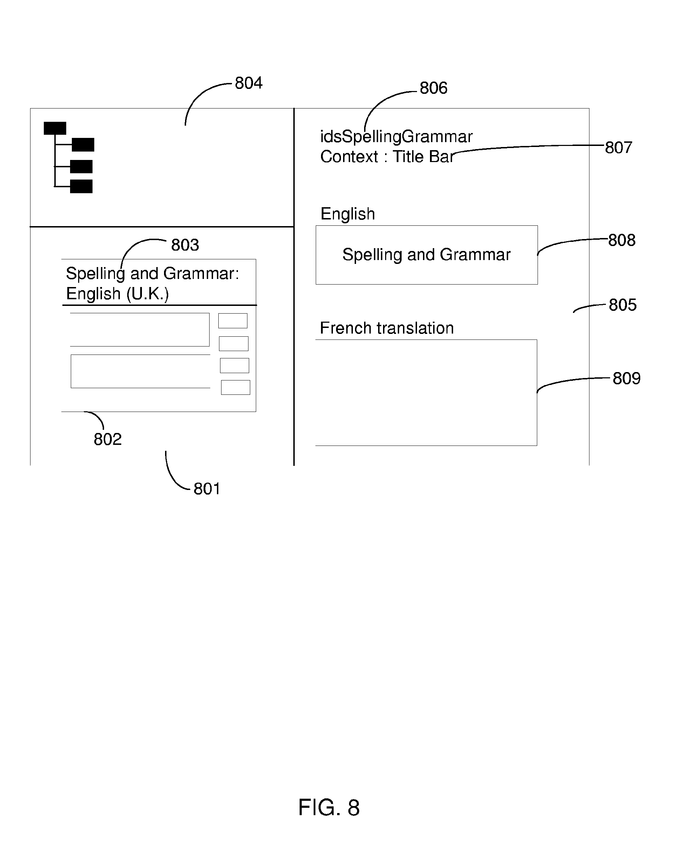

The context information obtained by the methods described above may be used to assist in localisation (e.g. for translation and / or for review) or for other purposes. A first example of use of this context information in localisation can be described with reference to FIGS. 6-8. FIG. 6 shows a schematic diagram of a localisation tool which may be used in performing initial translations of localisable resources such as strings, FIG. 7 shows a method of operation of the localisation tool and FIG. 8 shows a schematic diagram of a screen layout for the tool.

The localisation tool 600 comprises a processor 601 which connects to a memory 602, a localisation database 603, a mapping data store 604, an image store 605, a display apparatus 606 and a user input device 607. The memory 602 is used to store instructions which are for execution by the processor. The localisation database 603 contains information on all the localisable resources, such as the resource ID and the resource value along with project specific attributes such as translation status, the name of the person who made the change, the last change date, the source English string etc. The mapping data store 604 contains the context information which may be obtained as described above with reference to FIG. 1 (data stored in step 105) and as described above, this data may be held in a database, in one or more tables or in any other format which is accessible. The image store 605 holds the captured image data for Ul elements (such as dialogs) within the software product. These images may have been captured as described above (e.g. as part of step 103 in FIG. 1 or as shown in FIG. 4) or by any other method. The display device 606, which may be a computer screen or television, displays a Ul which is generated in the processor 606. This Ul is intended for viewing by a translator who can provide input to the processor (e.g. translated resources such as strings) via the user input device 607 which may comprise a keyboard and / or a mouse.

It will be appreciated that the elements shown in FIG. 6 are functional elements and are shown by way of example only. Alternative embodiments may include some or all of the elements shown in FIG. 6 (e.g. there may be no image data available and therefore no image storage 605) and one or more elements may be combined as appropriate (e.g. the display apparatus 606 and input apparatus 607 may be combined in the form of a touch sensitive screen). Although the elements are shown as part of a single tool 600, it will be appreciated that some / all of the elements may be co-located (e.g. as part of a computer) and some / all elements may be separate. For example, the processor 601, memory 602, display apparatus 606 and user input device 607 may comprise a computer whilst the localisation database 603, the mapping data store 604 and the image store 605 may be stored in the memory of the computer or may alternatively be stored remotely, e.g. on a remote server, which the computer connects to over a network (e.g. over a local area network, a virtual private network or the internet).

The processor 601 accesses the localisation database 603 (step 701) and identifies one or more resources for localisation (step 702) and the value of that resource in the source language. For example, the following resource may be identified: idsSpellingGrammar, and its value may be "Spelling and Grammar".
The processor then accesses the context information (e.g. state ID, control ID, control type etc.) for the identified resource (step 703). This information is stored in the mapping data store 604 and image store 605. Having accessed the context information, the processor displays (on display device 606) the context information alongside the value of the identified resource in the source language (step 704) as shown in FIG. 8.

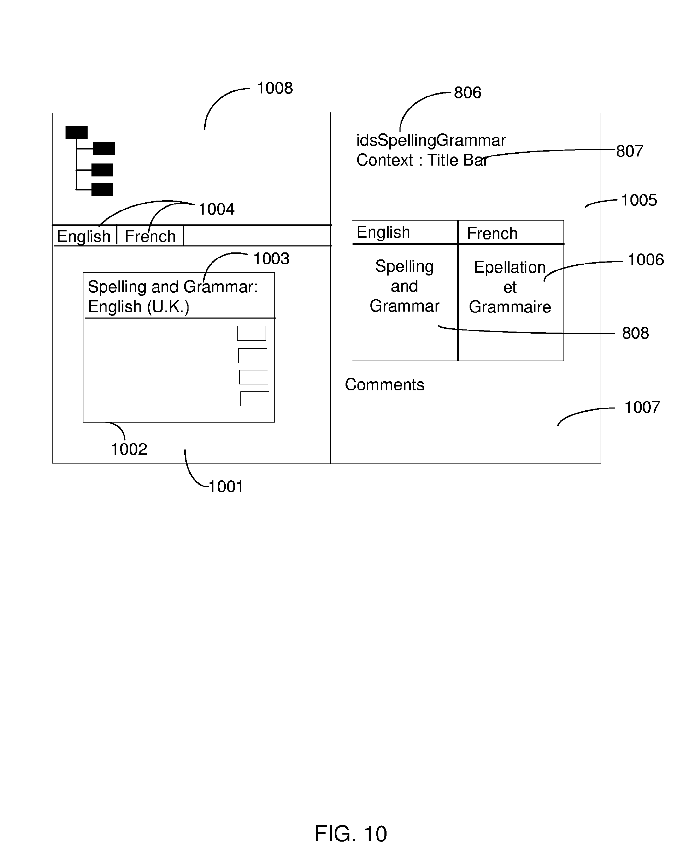

The example screen layout of FIG. 8 comprises three window panes:
- a Ul element view pane 801: This shows the image of a dialog 802 (or other Ul element) in which the identified resource is used. The identified resource 803 is shown within the dialog and may be highlighted (not shown in FIG. 8). The highlighting of a resource may use context information such as control location and control size which may be captured (in step 103) and stored (in step 105) in the mapping data store 604.
- a Ul element tree pane 804: This shows a tree structure of all Ul elements (such as dialogs) in which the identified resource is used. This enables the user to click through to view the other occurrences of the same resource within the software product being localised. In other examples, the tree structure may show all occurrences of a particular term (e.g. 'File'), all instances of a particular resource ID or all the controls or resources within a dialog or other UI element.
- a translation pane 805: This may show the resource ID 806 in addition to basic context information 807, such as the control type (a title bar in this example) and the value of the resource in the source language 808 (English in this example). The pane may also provide an input display field 809 for display of the translation of the resource value into the target language (French in this example) as it is entered by the user (see step 705 below).
It will be appreciated that the layout shown in FIG. 8 is by way of example only and alternative layouts may be used. Furthermore the layout shown in FIG. 8 is very simple for explanation purposes only and there may be more information displayed, more panes etc, for example, translations of the resource from other languages may be displayed (as described below with reference to the UI element view pane 1001 of FIG. 10). The use of such reference translations can greatly assist a translator (or reviewer, see below) as they can refer to languages which have already been translated and which may be more closely related to the target language than the source language. For example, when translating into Catalan, the reference translations into Spanish may be useful. The user may also rearrange the layout such that one or more panes are displayed as required. In another example, the layout may initially show just the translation pane 805 with additional panes being displayed in response to inputs received via the user input device 607.

The processor 601 receives the input of the translated value via the user input device 607 (step 705) and stores this translated resource (706), for example in the localisation database 603 or in a new database (not shown in FIG. 6) which may comprise the resource ID (e.g. idsSpellingGrammar) and the input translated resource value (e.g. "operation et grammaire"). The process is then repeated (steps 702-706) for each localisable resource.

By displaying the context information to the translator alongside the resource value that requires translation (as shown in FIG. 8), the translation can be performed in a more efficient, more accurate and faster manner. The process may be made more efficient by the provision of reference languages for comparison, as discussed above, particularly where a reference language exists which is more closely related to the target language than the source language.

In addition to linguistic errors occurring when software products are localised because the translation of strings is done in isolation from the real use of the strings in the software product itself, the same problems may also occur during the review of the translated strings (e.g. by a native speaker) if context information is not available. This review process typically involves a reviewer opening each translation database individually (e.g. opening one or more localisation databases 603) and stepping through all of the translations in each database, reviewing the translations and adding comments or flags as necessary.

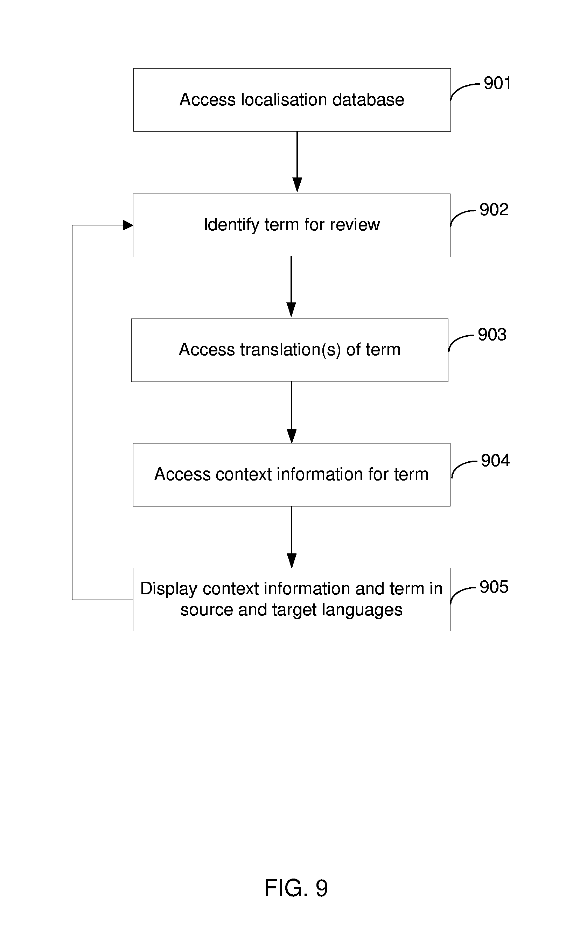

A second example of use of this context information obtained as described above with reference to FIGS. 1-5 is to assist the review stage of localisation, as can be described with reference to FIGS. 9 and 10. Runtime information for the newly translated version may also be captured (as shown in FIG. 4 but using the translated resource) and stored in a database. FIG. 9 shows a method of operation of a localisation tool which may be used by a reviewer to review translations which have already been made (e.g. as described above with reference to FIGS. 6-8 or by any other method) and FIG. 10 shows a schematic diagram of a screen layout for the tool. As many features or steps shown in FIGS. 9 and 10 are similar to those shown in FIGS. 7 and 8 and described above, common reference numerals have been used for similar elements. The functional elements of the localisation tool for use in translation review may be schematically very similar to that shown in FIG. 6 and described above. However it will be appreciated that the processor may be connected to an additional database containing the translations in examples where the translations are not stored in the localisation database.

The processor accesses the localisation database (step 901) and identifies a term in the source language (step 902). For example, the term "grammar" may be identified. A translation which has already been completed for the term is also accessed (step 903, e.g. "grammaire"); this translation may be stored in the localisation database, a DLL for the target language or in any other location. The context information for the resource is accessed (step 904), such as the resource IDs where the term occurs (e.g. idsSpellingGrammar), the string in which the term occurs in both the source and target languages (e.g. "Spelling and Grammar" and "épellation et grammaire") etc. This context information may be stored in one or more locations, for example: a mapping data store, an image store etc. The context information may include images of dialogs or other UI elements captured from the software product in one or more variants, such as the source language version (as shown in FIG. 4), the version with decorated resources (as described above), the initial version in the target language (using the unreviewed translations) and versions in any other language into which it has been translated. Having accessed the context information, the context information is displayed alongside the value of the strings containing the identified term in both the source and target languages (step 905) as shown in FIG. 10. The process may be repeated (steps 902-905) to iterate through all the terms in all the localised resources.

In other examples, a term in the target language may instead be identified (in step 902) or a resource may be identified for review (in step 902, e.g. by resource ID).

The example screen layout of FIG. 10 comprises three window panes:
- a UI element view pane 1001: This shows the image of a dialog 1002 (or other UI element) in which the identified term is used. The identified term 1003 is shown within the dialog and may be highlighted. In some examples, the Ul element may be viewed in only the source language (English in this example) whilst in other examples, the dialog may be viewed in any of a number of languages (e.g. the source language, the target language and other available languages, such as reference languages, as discussed above in relation to FIG. 8). Tabs 1004 for selection of the required display language version for the Ul element may be displayed or alternatively, more than one dialog (or other Ul element) image may be displayed at the same time.
- a Ul element tree pane 1008: This shows a tree structure of all Ul elements (such as dialogs) in which the identified term is used. This enables the user to click through to view the other occurrences of the same term within the software product being localised.
- a translation review pane 1005: This may show the resource ID 806 for the resource containing the identified term, in addition to basic context information 807, such as the control type (a title bar in this example), the value of the resource (containing the identified term) in the source language 808 (English in this example) and the value of that resource in the target language 1006 (French in this example). In addition to (or instead of) displaying the value of the resource in the source language, the value may be shown in one or more other languages, such as reference languages. The pane may also provide a display window 1007 for display of any comments which may be entered by the reviewer (as described below).
It will be appreciated that the layout shown in FIG. 10, as with FIG. 8, is a simple representation for explanation purposes only. Additional information and window panes may be displayed and the layout may be configurable by the user.

If on viewing any of the translated resources, the reviewer has comments, these may be input via the user input device and this input will be received by the localisation tool and stored, for example in the localisation database, wherever the translations are stored, or in a separate store of review comments. These comments may subsequently be fed back to the translator. This passing back of comments may be use techniques similar to those used for bug management, for example as described in co-pending European patent application entitled "Bug Management Tool" filed 13 June 2006.

By displaying the context information to the reviewer alongside the resource value that requires translation (as shown in FIG. 10), the translation review process can be performed in a more efficient, more accurate and faster manner. Furthermore, using the methods described above, the translator does not need to open individual databases or step through the items as they appear in the database. Instead, the translator can step through the user interface e.g. dialog by dialog (so that all related strings are reviewed together) or alphabetically by string.

Although the examples described above show the translation occurring between a first and a second language and the translation review occurring between those same two languages, this is by way of example only. In some circumstances the translation may occur between a first and a second language whilst the review occurs between the second language and one or more other languages which are not the first language. In such an example, the translation review pane 1005 (in FIG. 10) may not show the source language value of the resource 808 but may show the value of the resource in one or more other languages.

Although all the examples described above use a resource which is a string, this is by way of example only. The methods and apparatus described are also applicable to other resource types including, but not limited to, hotkeys, html and xml.

The examples given above all relate to localisation. However the context information which is obtained may be used in other applications such as modification of a software product e.g. to correct bugs, to upgrade the product etc. It may also be used in determining which strings appear at run-time to enable a developer to check whether strings are missing or if strings change in any way before they are displayed.

The methods described above may also be used in costing and testing a terminology change (e.g. if marketing wish to change some key terminology). The methods can identify how much of the top level Ul is impacted, and which parts of the Ul need to be retested once the change is made. The methods may also be used to provide terminology examples for packaging or documentation (e.g. for a glossary) for a software product by identifying and obtaining bitmaps of key dialogs containing particular terms which may then be included in the documentation / packaging. The review process may also be used to check that this is done correctly.

Although the methods described above are shown iterating through all the Ul elements in a software product, it will be appreciated that the methods could be used for one or more types of Ul element, for example, for just the dialogs, for the menus and tool bars etc.

Although the present examples are described and illustrated herein as being implemented in a computer based system, the system described is provided as an example and not a limitation. As those skilled in the art will appreciate, the present examples are suitable for application in a variety of different types of systems.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

## Claims

1. A method of capturing context information for use in localisation of a software product, the software product comprising a plurality of localisable resources and a user interface comprising a plurality of Ul elements, the method comprising:
appending a different unique reference to each of the plurality of localisable resources to produce a plurality of decorated localisable resources;
launching the software product using the plurality of decorated localisable resources;
capturing information associated with a first UI element;
processing the captured information associated with the first UI element; storing the processed captured information associated with the first UI element; and
repeating the capturing, processing and storing steps for each of the plurality of UI elements.

2. A method according to claim 1, wherein the information associated with a first UI element comprises at least one of: an element ID, a dialog ID, a state ID, a control ID, a control type, a control caption, coordinates associated with the first UI element and an image of the first UI element.

3. A method according to any of the preceding claims, wherein appending a different unique reference to each of the plurality of localisable resources to produce a plurality of decorated localisable resources comprises:
identifying one of the plurality of localisable resources;
generating a unique reference for the identified one of the plurality of localisable resources;
appending the unique reference to the identified one of the plurality of localisable resources; and
repeating the identifying, generating and appending steps for each of the plurality of localisable resources to produce a plurality of decorated localisable resources.

4. A method according to claim 3, wherein generating a unique reference for the identified one of the plurality of localisable resources comprises:
selecting at least one parameter associated with the identified one of the plurality of localisable resources; and
calculating a hash function of the selected at least one parameter.

5. A method according to claim 4, wherein the hash function comprises one of:
MD4, MD5, SHA-1 and SHA-2.

6. A method according to any of the preceding claims, further comprising:
storing the plurality of decorated localisable resources.

7. A method according to any of the preceding claims, further comprising:
storing the unique references generated for each of the plurality of localisable resources.

8. A method according to any of the preceding claims, wherein processing the captured information associated with the first Ul element comprises:
identifying one of the plurality of decorated localisable resources;
extracting the unique reference from the identified one of the plurality of decorated localisable resources;
using the extracted reference to access information associated with the identified one of the plurality of decorated localisable resources; and
repeating the identifying, extracting and using steps for each of the plurality of decorated localisable resources.

9. A method according to any of the preceding claims, wherein the first UI element comprises one of: a dialog, a menu, a toolbar, a tooltip, an error message and an annotation.

10. A method of localising a software product, the software product comprising a plurality of localisable resources and the method comprising:
capturing context information according to any of the preceding claims;
storing the captured context information in a mapping data store (604);
identifying a first localisable resource and a value for the first localisable resource in a source language;
accessing context information for the first localisable resource from the mapping data store;
displaying the context information and the value for the first localisable resource;
receiving an input of a first translated resource;
storing the first translated resource; and
repeating the identifying, accessing, displaying, receiving and storing steps for each of the plurality of localisable resources.

11. A method of localising a software product, the software product comprising a plurality of localisable resources and the method comprising:
capturing context information according to any of claims 1-9;
storing the captured context information in a mapping data store (604);
selecting a first string in a first language;
identifying one or more localisable resources in the first language having a value containing the first string and identifying values for the identified one or more localisable resources in both a first language and a second language;
accessing context information for the identified one or more localisable resources from the mapping data store;
displaying the accessed context information and the values for the identified one or more localisable resources in the first and the second languages; and
repeating the selecting, identifying, accessing, and displaying steps for another string in the first language.

12. A computer program comprising computer program code means adapted to perform all the steps of any of the preceding claims when said program is run on a computer.

13. A computer program as claimed in claim 12 embodied on a computer readable medium.

14. Apparatus for capturing context information for use in localisation of a software product, the software product comprising a plurality of localisable resources and a user interface comprising a plurality of Ul elements, the apparatus comprising:
means for appending a different unique reference to each of the plurality of localisable resources to produce a plurality of decorated localisable resources;
means for launching the software product using the plurality of decorated localisable resources;
means for capturing information associated with a first UI element;
means for processing the captured information associated with the first dialog;
means for storing the processed captured information associated with the first UI element; and
means for repeating the capturing, processing and storing steps for each of the plurality of UI elements.

15. A localisation tool comprising:
apparatus for capturing context information according to claim 14;
a processor (601);
a display apparatus (606);
a user input device (607);
a memory (602) arranged to store executable instructions arranged to cause the processor to:
store the captured context information a mapping data store (604);
identify a first localisable resource and a value for the first localisable resource in a source language from a localisation database (603);
access context information for the first localisable resource from a mapping data store (604);
output the accessed context information and the value for the first localisable resource to the display apparatus;
receive an input of a first translated resource from the user input device;
store the first translated resource; and
repeat the identifying, accessing, outputting, receiving and storing steps for each of the plurality of localisable resources.

16. A localisation tool according to claim 15, wherein the accessed context information comprises at least one of: a control type and an image of a UI element.

17. A localisation tool comprising:
apparatus for capturing context information according to claim 14;
a processor (601);
a display apparatus (606);
a user input device (607);
a memory (602) arranged to store executable instructions arranged to cause the processor to:
store the captured context information a mapping data store (604);
select a first string in a first language from a localisation database (603);
identify one or more localisable resources in the first language having a value containing the first string and values for the identified one or more localisable resources in the first language from the localisation database (603);
identify values for the identified one or more localisable resources in a second language;
access context information for the identified one or more localisable resources from a mapping data store (604);
output the accessed context information and the values for the identified one or more localisable resources in the first and the second languages to the display apparatus (606); and
repeat the selecting, identifying, accessing, and outputting steps for another string in the first language.
